## Europäisches Patentamt

## European Patent Office

## Office européen des brevets

(11) Publication number: **0 023 748**
A1

# EUROPEAN PATENT APPLICATION

(21) Application number: **80200745.0**

(51) Int. Cl.³: **C 08 F 2/32**

(22) Date of filing: **01.08.80**

(30) Priority: **03.08.79 US 63896**

(43) Date of publication of application: **11.02.81**
**Bulletin 81/6**

(84) Designated Contracting States: **DE FR GB IT NL SE**

(71) Applicant: **THE DOW CHEMICAL COMPANY,**
**2030 Abbott Road Post Office Box 1967, Midland,**
**Michigan 48640 (US)**

(72) Inventor: **Zweigle, Maurice Laverne, 908 Crescent Drive,**
**Midland, Michigan 48640 (US)**

(74) Representative: **Urbanus, Henricus Maria, Ir. et ai, c/o**
**Vereenigde Octrooibureaux Nieuwe Parklaan 107,**
**NL-2587 BP 's-Gravenhage (NL)**

(54) **A method for water-in-oil suspension polymerization of water-soluble monomers using an improved aminated suspending agent.**

(57) This invention is a method for water-in-oil suspension polymerization for making polymers of water-soluble ethylenically unsaturated monomers. This method comprises (1) forming a water-in-oil suspension of an aqueous solution containing a water-soluble ethylenically unsaturated monomer dispersed in an inert hydrophobic organic liquid containing an aminated inorganic suspending agent having a low hydrophile-lyophile balance and (2) heat polymerizing the suspended monomer in the presence of a catalytic amount of a polymerization initiator to form a water-in-oil suspension of polymeric product. The method is characterized in that the suspending agent is substantially free of unreacted aminating agent.

0023748

A method for water-in-oil suspension polymerization of water-soluble monomers using an improved aminated suspending agent.

This invention concerns a polymerization process in which an aqueous solution of a water-soluble unsaturated monomer is suspended in an oil phase and polymerized therein to give polymeric products in a bead form.

Water-soluble unsaturated monomers such as acrylamide are conventionally polymerized by mass, solution or special oil-in-water suspension or emulsion techniques. For example, as taught in U.S. 2,982,749, aqueous solutions of water-soluble unsaturated monomers and mixtures thereof can be suspended in an oil phase to form a suspension of globules ranging between 10 microns and 2 millimeters in diameter and polymerized therein to give polymeric products in bead form having a controlled size. The bead size is controlled by the efficiency and the amount of the suspending agent used. Normally, the suspending agent is a solid or liquid substance having a low hydrophile-lyophile balance, i.e., is preponderantly hydrophobic. Typically, such suspending agents include, for example, inorganic hydroxy oxides having substituent hydrocarbonylsilyl, hydro-
carbonylsilylene or hydrocarbonylsilylidyne radicals;
low hydrophile-lyophile kaolin treated with rosin
amine; bentonite treated with organic ammonium cation
yielding reagents; organic polymers such as ethylcellulose and others having hydrophilic substituents such as
amine, sulfone and carboxy.

Of the foregoing suspending agents, it is
found that the so-called aminated bentonites and other
aminated suspending agents are particularly useful in
the suspension polymerization of acrylamide and mixtures
thereof with comonomers such as acrylic acid. Unfortunately, it is often found that such suspension polym-
erizates fail at some point during the polymerization
run to remain in suspension. As a result, the product
of such polymerization is generally not as useful as
desired and is difficult to recover in bead form.

In view of the foregoing problem existing in
the art of suspension polymerization of water-soluble
monomers in the presence of aminated suspending agents,
it would be highly desirable to provide a suspension
polymerization method in which such suspension stability
problems are minimized.

The present invention is a method for water-
-in-oil suspension polymerization comprising the steps
of (1) forming a water-in-oil suspension of an aqueous
solution containing a water-soluble ethylenically
unsaturated monomer dispersed in an inert hydrophobic
organic liquid containing an aminated inorganic suspending agent having a low hydrophile-lyophile balance and
(2) heat polymerizing the suspended monomer in the presence of a catalytic amount of a polymerization initiator to form a water-in-oil suspension of polymeric product characterized in that the suspending agent is substantially free of unreacted aminating agent.

Surprisingly, it is found that by employing an aminated inorganic suspending agent containing little or no unreacted aminating agent, the resulting suspension is stable throughout the polymerization and for a substantial period thereafter. In contrast, in polymerization methods wherein the suspending agent contains as little as 0.75 weight percent of unreacted aminating agent based on the weight of the inorganic suspending agent, the suspensions are very unstable and many are destroyed before the suspension polymerization is completed.

The polymeric products of the suspension polymerization method of this invention are advantageously recovered in the form of beads which, because of their higher bulk density, are easier to separate, wash, dry and handle than other polymeric forms particularly solid polymeric powders or flakes. The beads have a fast solution rate without danger of degradation which is present in other forms of the polymer which require heating or mechanical subdividing to expedite solution thereof. These polymeric beads are useful as binders in coating compositions, and as flocculating, suspending or thickening agents.

Monomers suitably employed in the practice of this invention are water-soluble ethylenically unsaturated monomers capable of undergoing addition polymerization. Such monomers include acrylamide, methacrylamide, N-substituted acrylamides and methacrylamides such as N-(dimethylaminomethyl)acrylamide and N-methylol acrylamide, acrylic acid, methacrylic acid, vinylbenzyl trimethylammonium chloride, alkali metal and ammonium salts of 2-sulfoethyl ethacrylate and 2-sulfoethyl methacrylate, 2-aminoethyl methacrylate hydrochloride and the alkali metal and ammonium salts of vinylbenzyl sulfonate.

The oil phase can be any inert hydrophobic liquid which can be readily separated from the polymeric product. Of such liquids, the hydrocarbons and chlorinated hydrocarbons such as toluene, xylene, orthodichlorobenzene, monochlorobenzene, propylene dichloride, carbon tetrachloride, as well as aliphatic hydrocarbons such as $C_8$-$C_{13}$ alkanes are advantageously employed. Of these inert liquids, toluene and xylene are preferred.

Suspending agents suitably employed in the practice of this invention are aminated inorganic suspending agents having a low hydrophile-lyophile balance. Exemplary inorganics include the predominantly hydrophobic kaolin clays, bentonite clays, and other inorganic agents that contain anionic moieties available for reaction to form salts with the aminating agents. Exemplary aminating agents are those secondary, tertiary and primary amines containing at least one organic group having more than five carbon atoms, preferably more than 10 carbon atoms. Of the aminating agents, the quaternary ammonium compounds are preferred. Exemplary aminating agents include, for example, dimethyl dioctadecylammonium chloride, lauryl trimethylammonium chloride, dimethyl didodecylammonium chloride, benzyl trimethylammonium chloride, and octyldecyl dimethylammonium chloride. Of the foregoing preferred quaternary ammonium compounds, dimethyl dioctyldecylammonium chloride is preferred. In the reaction of the inorganic anionic material with the aminating agent, it is common to employ an amount of aminating agent in stoichiometric excess of the anionic groups of the inorganic material. Such reactions are carried out in conventional manner well known to those skilled in the art.

In the practice of this invention, it is necessary to treat the aminated suspending agent which contains an excessive amount of unreacted aminating agent with a means capable of extracting or deactivating such excess of unreacted aminating agent. Exemplary extracting means include a Soxhlet extractor or comparable extracting apparatus using an alcohol or some other solvent for the unreacted aminating agent. Alternatively and preferably, the aminated suspending agent containing the unreacted aminating agent is contacted with a reagent capable of reacting with, and thereby deactivating, said unreacted aminating agent. Exemplary reactive agents include anionic surfactants such as sodium lauryl sulfate, sodium alkylbenzene sulfonate and other anionic surfactants exemplified in McCutcheon's Detergents and Emulsifiers, 1973 Annual. Of the foregoing anionic surfactants, the sulfates and sulfonates are found to be particularly effective. Although less preferred, the unreacted aminating agent can also be at least partially deactivated by heating the aminated suspending agent to temperatures in the range from 75° to 150°C for a period from one to three hours.

In order to be substantially free of unreacted aminating agent, the aminated suspending agent must contain less than 0.75 weight percent of unreacted aminating agent based on the weight of the aminated suspending agent, preferably less than 0.5 weight percent, most preferably less than 0.1 weight percent.

In the practice of this invention, the aminated suspending agent is dissolved or suspended in the oil phase. An aqueous solution of monomer(s) with or without added polymerization initiator is added to the oil phase with vigorous agitation until the aqueous solution is suspended in the oil phase as globules ranging between 10 microns and 2 millimeters in diameter. The reaction temperature of the suspension is then increased to one which affects polymerization, e.g., from 20° to 100°C, and the reaction is continued, generally with mild agitation to prevent separation of phases or adhesion of polymer beads, until conversion from monomer to polymer is substantially complete.

Advantageously, the aqueous solution or monomer contains from 5 to 80 weight percent of monomer in water, depending upon the monomer and polymerization temperature. The ratio of aqueous monomer phase to oil phase is also widely variable, advantageously from 5 to 75 weight parts of aqueous phase to 95 to 25 parts of oil phase. The suspending agent should be employed in an amount sufficient to assure the desired degree of subdivision of the aqueous monomer phase, usually from 0.4 to 1 weight percent based on the weight of the aqueous phase.

Polymerization initiated by an added free radical generator is preferred. Free radical polymerization initiators include peroxide catalysts such as t-butyl peroxide and dimethane sulfonil peroxide and redox systems such as t-butyl peroxide or potassium persulfate in combination with usual reducing agents such as sodium bisulfite. Alternatively, free radicals are generated in situ by ultraviolet or X-rays.

The reaction is usually carried out at atmospheric or substantial atmospheric pressure. However, superatmospheric pressure is advantageously used when volatile ingredients are employed.

Following the reaction the resulting polymeric beads are separated from the reaction mixture and washed and dried.

The following examples are given to illustrate the invention and should not be construed as limiting its scope. In the following examples, all parts and percentages are by weight.

Examples 1, 2, 3, 4 and Comparative Run A

A 3.75-part portion of aminated bentonite prepared by reacting a bentonite clay with dimethyldioctyldecylammonium chloride (sold under the trade name Bentogen PAD 50 by General Mills of Mexico) was dispersed in xylene to provide about one weight percent slurry of the suspending agent. To this slurry was added one weight percent based on the suspending agent of sodium lauryl sulfate and stirred at room temperature for an hour.

To this slurry of suspending agent containing 450 ml of xylene and 3.75 g of the quaternized bentonite was added an aqueous phase containing 120 g of a 48 percent aqueous solution of acrylamide, 160 ml of water, 3.75 ml of a ten percent active aqueous solution of pentasodium(carboxymethylamino)bisethylene-nitrilo)-tetraacetic acid (Versenex® 80), 19.8 g of sodium carbonate, 0.09 mL of a 50 percent aqueous solution of sodium hydroxide, 0.042 g of sodium persulfate and 0.03 g of calcium hydroxide. The calcium hydroxide was added to the monomer solution to insure that no residual anionic surfactant remained in the resulting suspension. The aqueous phase was added to the oil phase at 35°C in a reactor under a nitrogen purge. After about 15 minutes, a slight exotherm was detected and external heating was applied to bring the reactor temperature to 70°C. Polymerization sharply accelerated to a temperature peak between 70° and 75°C after which time external heat was removed. While applying mild agitation to the suspension, it was allowed to cool to room temperature and then removed from the reactor and evaluated for particle size distribution and stability. The results for this sample (Sample No. 1) are reported in Table I.

Examples 2 and 3 were carried out following the foregoing suspension polymerization procedure but using quaternized bentonites which were heated in air at 120°C for four hours or extracted in a Soxhlet extractor using ethyl alcohol for 16 hours, respectively. Example 4 was carried out following the procedure of Example 1 except that the oil: aqueous weight ratio was 1:1 rather than 1.3:1. The results of these Examples are also reported in Table I.

Finally, as Comparative Run A, the quaternized bentonite, containing unreacted quaternizing agent, was employed as a suspending agent in a suspension polymerization run similar to the preceding ones. The results of Comparative Run A are also reported in Table I.

TABLE I

| | Suspending Agent(1) | Oil:Aqueous Wt. Ratio(2) | Suspension Stability(3) |
|---|---|---|---|
| Example 1 | QB-SLS | 1.3:1 | E |
| Example 2 | QB-HT | 1.3:1 | A |
| Example 3 | QB-EX | 1.3:1 | E |
| Example 4 | QB-SLS | 1:1 | E |
| Comparative Run A | QB | 1.3:1 | SF |

(1)  QB - bentonite clay reacted with dimethyldioctyldecyl-ammonium chloride sold by General Mills of Mexico under trade name Bentogen PAD 50
SLS - sodium lauryl sulfate
HT - heat treatment (120°C, 4 hours)
EX - extraction with Soxhlet extractor using ethyl alcohol for 16 hours.

(2)  Weight ratio of oil phase to aqueous phase in the suspension

(3)  E - excellent stability (no agglomeration)
A - some agglomeration (1/8" - 1/4" (3.2-6.4 mm) agglomerates = 20%)
SF - total suspension failure.

-11-    0023748

CLAIMS:

1. A method for water-in-oil suspension polymerization comprising (1) forming a water-in-oil suspension of an aqueous solution containing a water--soluble ethylenically unsaturated monomer dispersed in an inert hydrophobic organic liquid containing an aminated inorganic suspending agent having a low hydrophile-lyophile balance and (2) heat polymerizing the suspended monomer in the presence of a catalytic amount of a polymerization initiator to form a water--in-oil suspension of polymeric product characterized in that the suspending agent is substantially free of unreacted aminating agent.

2. The method of Claim 1 characterized in that the suspending agent contains less than 0.5 weight percent of unreacted aminating agent.

European Patent
Office

**EUROPEAN SEARCH REPORT**

0023748
Application number

EP 80 20 0745

## DOCUMENTS CONSIDERED TO BE RELEVANT

| Category | Citation of document with indication, where appropriate, of relevant passages | Relevant to claim |
|---|---|---|
| D | US - A - 2 982 749 (R.E. FRIEDRICH)<br><br>* Claim 1; column 1, lines 30-32; 39-42; 57-61; column 2, lines 14-21; 44-48; 53-63; examples 5,7 *<br><br>---- | 1 |

**CLASSIFICATION OF THE APPLICATION (Int. Cl.³)**

C 08 F 2/32

**TECHNICAL FIELDS SEARCHED (Int. Cl.³)**

C 08 F    2/12
2/16
2/18
2/32
20/00
20/04
20/06
20/52
20/54
20/56
20/58
220/00
220/04
220/06

**CATEGORY OF CITED DOCUMENTS**

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

The present search report has been drawn up for all claims

| Place of search | Date of completion of the search | Examiner |
|---|---|---|
| The Hague | 06-11-1980 | BOLETTI |

EPO Form 1503.1   06.78

| | DOCUMENTS CONSIDERED TO BE RELEVANT | | CLASSIFICATION OF THE APPLICATION (Int. Cl. ³) |
|---|---|---|---|
| Category | Citation of document with indication, where appropriate, of relevant passages | Relevant to claim | |
| | | | |

TECHNICAL FIELDS SEARCHED (Int. Cl. ³)

C 08 F 220/52
220/54
220/56
220/58